# EUROPÄISCHE PATENTSCHRIFT

(11) **EP 3 759 512 B1**
(45) Veröffentlichungstag und Bekanntmachung des Hinweises auf die Patenterteilung: **01.01.2025**
(21) Anmeldenummer: 19710600.8
(22) Anmeldetag: 05.02.2019
(51) Int. Cl.: G01S 7/03, H01Q 1/38, H01Q 21/00, H01Q 21/06

(54) **RADARSYSTEM ZUR UMFELDERFASSUNG EINES KRAFTFAHRZEUGS MIT EINER KUNSTSTOFFANTENNE**
RADAR SYSTEM FOR DETECTING THE ENVIRONMENT OF A MOTOR VEHICLE HAVING A PLASTIC ANTENNA
SYSTÈME RADAR SERVANT À DÉTECTER L'ENVIRONNEMENT D'UN VÉHICULE AUTOMOBILE AVEC UNE ANTENNE EN MATIÈRE PLASTIQUE

(30) Priorität: 01.03.2018 DE 102018203106
(43) Veröffentlichungstag der Anmeldung: 06.01.2021
(73) Patentinhaber: Continental Autonomous Mobility Germany GmbH, 85057 Ingolstadt (DE)
(72) Erfinder: WINTERMANTEL, Markus, 90411 Nürnberg (DE)
(74) Vertreter: Continental Corporation
(86) Internationale Anmeldenummer: PCT/DE2019/200010
(87) Internationale Veröffentlichungsnummer: WO 2019/166064

(56) Entgegenhaltungen:
- EP-A1- 1 983 614
- EP-A2- 1 274 149
- DE-A1- 102014 200 660
- US-A1- 2012 013 499

## Beschreibung

Die Erfindung bezieht sich auf ein Radarsystem zum Einsatz für Fahrerassistenzsysteme im Kraftfahrzeug. Das Radarsystem besitzt erfindungsgemäß eine Kunststoffantenne sowie ein Hochfrequenzbauteil mit mindestens einem Element zum direkten Abstrahlen bzw. Empfangen.

### Stand der Technik

Kraftfahrzeuge werden zunehmend mit Fahrerassistenzsystemen ausgerüstet, welche mit Hilfe von Sensorsystemen die Umgebung erfassen und aus der so erkannten Verkehrssituation automatische Reaktionen des Fahrzeugs ableiten und/oder den Fahrer instruieren, insbesondere warnen. Dabei unterscheidet man zwischen Komfort- und Sicherheitsfunktionen.

Als Komfortfunktion spielt in der momentanen Entwicklung FSRA (Full Speed Range Adaptive Cruise Control) die wichtigste Rolle. Das Fahrzeug regelt die Eigengeschwindigkeit auf die vom Fahrer vorgegebene Wunschgeschwindigkeit ein, sofern die Verkehrssituation dies zulässt, andernfalls wird die Eigengeschwindigkeit automatisch an die Verkehrssituation angepasst.

Sicherheitsfunktionen gibt es mittlerweile in vielfältiger Ausprägung. Eine Gruppe bildet dabei Funktionen zur Reduzierung des Brems- bzw. Anhalteweges in Notsituationen bis hin zur autonomen Notbremsung. Eine weitere Gruppe sind Spurwechselfunktionen: Sie warnen den Fahrer bzw. greifen in die Lenkung ein, wenn der Fahrer einen gefährlichen Spurwechsel durchführen möchte, also wenn sich ein Fahrzeug auf der Nebenspur entweder im toten Winkel befindet (wird als BSD - "Blind Spot Detection" - bezeichnet) oder sich schnell von hinten nähert (LCA - "Lane Change Assist").

In absehbarer Zukunft wird der Fahrer aber nicht mehr nur assistiert, sondern die Aufgabe des Fahrers wird zunehmend autonom vom Fahrzeug selber erledigt, d.h. der Fahrer wird zunehmend ersetzt; man spricht von autonomem Fahren.

Für Systeme der oben beschriebenen Art werden Radarsensoren eingesetzt, häufig auch in Fusion mit Sensoren anderer Technologie wie z.B. Kamerasensoren. Radarsensoren haben den Vorteil, dass sie auch bei schlechten Wetterbedingungen zuverlässig arbeiten und neben dem Abstand von Objekten auch direkt deren radiale Relativgeschwindigkeit über den Dopplereffekt messen können. Als Sendefrequenzen werden dabei 24GHz, 77GHz und 79GHz eingesetzt.

Durch den zunehmenden funktionalen Umfang solcher Systeme erhöhen sich permanent die Anforderungen, insbesondere an die maximale Detektionsreichweite. Gleichzeitig findet aber dennoch ein starker Preisverfall statt.

Zentrales Element jedes Radarsensors ist die Antenne; sie definiert maßgeblich die Performance und den Preis des Sensors. Aktuell werden die Antennen meist in Planartechnologie auf der Hochfrequenz-Platine realisiert, z.B. als Patchantennen. Nachteilig an einer solchen Antennenrealisierung sind einerseits die Verluste in Zuleitungen und Antennen selber (was die Reichweite limitiert) und andererseits die hohen Kosten für eine solche Platine (insb. weil spezielle hochfrequenzfähige Substrate benötigt werden, die teuer sind und eine aufwändige Prozessierung benötigen).

Aus der EP 1 983 614 A1 ist ein Radarsystem zur Umfelderfassung bekannt, dass eine Platine mit einem Hochfrequenzbauteil mit Halbleiterchips zum Abstrahlen bzw. Empfangen umfasst. Die vom Halbleiterchip erzeugte Strahlung wird dabei über einen dielektrischen Wellenleiter und durch einen weiteren Wellenleiter in eine Antenne aus Edelstahl geleitet.

Die US 2012/013499 A1 offenbart ein Hochfrequenzmodul für ein Radargerät. Das Hochfrequenzmodul umfasst eine Leiterplatte, enthaltend ein Substrat, das eine Vielzahl von Wellenleiterleitungen und eine Vielzahl von laminierten Wellenleitern aufweist, die innerhalb des Substrats ausgebildet sind. Darüber hinaus sind Halbleiterelemente zum Senden und Empfangen vorgesehen, die das Signal in die Wellenleiterleitungen abstrahlen oder von diesen empfangen. Die Wellenleiterleitungen sind dabei über Koppler mit den laminierten Wellenleitern verbunden.

Die DE 10 2014 200 660 A1 offenbart ein HF-Modul mit einer HF-Trägerplatte und einer daran angeordneten HF-Leiterplatte mit einer Radarsignale erzeugenden integrierten Schaltung sowie einen integrierten Wellenleiter für die erzeugten Radarsignale, der die Radarsignale dann an einen Wellenleiter eines Antennenmoduls leitet.

Ferner beschreibt die EP 1 274 149 A2 ein Metallsubstrat mit einer Isolierplatte, wobei die Isolierplatte Übertragungslinien aufweist, welche sich auf beiden Seiten der Isolierplatte befinden, und die Seiten mit Durchgängen verbunden sind. Ferner ist eine Bohrung im Metallsubstrat und der Isolierplatte als Wellenleiter vorgesehen, die eine Antenne anbindet.

### Aufgabe, Lösung und Vorteile der Erfindung

Aufgabe der Erfindung ist es, einen Aufbau eines Radarsystems vorzuschlagen, welcher zu verbesserter Performance und reduzierten Kosten führt.

Diese Aufgabe wird grundsätzlich durch ein Radarsystem gemäß den Ansprüchen 1-7 gelöst.

Die Vorteile der Erfindung ergeben sich aus der Tatsache, dass ein Radarsystem trotz verbesserter Performance zu geringerem Preis realisiert werden kann und zusätzlich noch eine Größenreduktion ermöglicht wird.

Erfindungsgemäß umfasst das Radarsystem zur Umfelderfassung eines Kraftfahrzeugs eine Antenne auf Kunststoffbasis, wobei die Kunststoffantenne eine oder mehrere Einzelantennen zum Senden und/oder Empfangen von Radarsignalen aufweist, und eine Platine aufweisend mindestens ein Hochfrequenzbauteil als Hochfrequenzchip mit mindestens einem Element zum direkten Abstrahlen bzw. Empfangen. Das System zeichnet sich dadurch aus, dass die Kunststoffantenne auf der zu dem wenigstens einen Hochfrequenzbauteil gegenüberliegenden Seite der Platine angeordnet ist, das mindestens eine abstrahlende bzw. empfangende Elemente so ausgebildet ist, dass es in Richtung Platine abstrahlt bzw. aus Richtung Platine empfängt, die Platine im Bereich des mindestens einen abstrahlenden bzw. empfangenden Elements für Radarwellen durchlässig ist, und sich an der mindestens einen durchlässigen Stelle der Platine eine Ein- bzw. Auskoppelstelle auf der Kunststoffantenne befindet.

Die Kunststoffantenne ist bevorzugt als Hohlleiterantenne ausgebildet. Durch das erfindungsgemäße Radarsystem ist bevorzugt eine direkte Speisung der Kunststoffantenne möglich. Dies wird insbesondere dadurch erreicht, dass das Radarsystem ein Hochfrequenzbauteil bzw. einen Hochfrequenzchip aufweist mit direkter Abstrahlung von einer Unterseite durch eine Platine hindurch in eine kunststoffbasierte Hohlleiterantenne.

Vorteilhafterweise ist die mindestens eine für Radarwellen durchlässige Stellen durch ein Loch in der Platine mit metallisierten Seitenwänden ausgebildet.

Ferner kann die mindestens eine für Radarwellen durchlässige Stelle in der Platine auch dadurch realisiert werden, dass die Platine einen Durchbruch aufweist, in dem bzw. durch den ein Wellenleiterfortsatz von der Kunststoffantenne ragt.

Denkbar ist auch, dass die mindestens eine für Radarwellen durchlässige Stelle in der Platine dadurch realisiert ist, dass sich dort auf und/oder zwischen Trägermaterialschichten der Platine keine Metallisierung befindet und die Stelle bevorzugt mit Durchkontaktierungen umrandet ist.

Bevorzugt können bei dem Radarsystem auf einer Unterseite des mindestens einen Hochfrequenzbauteils Lotperlen um das mindestens eine abstrahlende bzw. empfangende Element so angeordnet sein, dass ein seitliches Entweichen der Strahlung in einem Zwischenraum von Hochfrequenzbauteil und Platine reduziert bzw. verhindert wird. Insbesondere kann so eine Verkopplung zwischen mehreren Übergängen vermieden werden.

Weiter bevorzugt kann das Radarsystem eine thermisch gut leitende Komponente, insbesondere einen metallischen Deckel, aufweisen. Die Komponente ist vorteilhafterweise auf derselben Seite der Platine wie das mindestens eine Hochfrequenzbauteil angeordnet. Besonders bevorzugt ist ein thermischer Kontakt, insbesondere durch Wärmeleitpaste, zwischen Hochfrequenzbauteil und der Komponente hergestellt.

Vorteilhafterweise ist auf der der Kunststoffantenne zugewandten Seite der Platine mindestens ein Bauteil angeordnet. Das Bauteil kann durch eine Kavität in der Kunststoffantenne, die bevorzugt metallisiert ist, abgedeckt sein.

### Kurzbeschreibung der Zeichnungen

Fig. 1 zeigt eine Hochfrequenzplatine eines Radarsystems nach Stand der Technik.
Fig. 2 zeigt die Oberseite (links) und die Unterseite (rechts) einer quaderförmigen kunststoffbasierten Hohlleiterantenne.
Fig. 3 zeigt einen Schnitt durch einen nicht erfindungsgemäßen Radarsensor mit direkter Abstrahlung von einer Oberseite eines Hochfrequenzchips in eine Hohlleiterantenne.
Fig. 4 zeigt einen Schnitt durch einen erfindungsgemäßen Radarsensor mit direkter Abstrahlung von einer Unterseite eines Hochfrequenzchips durch eine Öffnung in einer Platine in eine Hohlleiterantenne, welche sich auf der gegenüberliegenden Seite der Platine befindet.
Fig. 5 zeigt einen Schnitt durch einen erfindungsgemäßen Radarsensor mit direkter Abstrahlung von einer Unterseite eines Hochfrequenzchips in eine Hohlleiterantenne auf der gegenüberliegenden Antennenseite, wobei Wellenleiterfortsätze der Hohlleiterantenne durch Platinendurchbrüche Richtung Hochfrequenzchip ragen.

### Ausführungsbeispiele

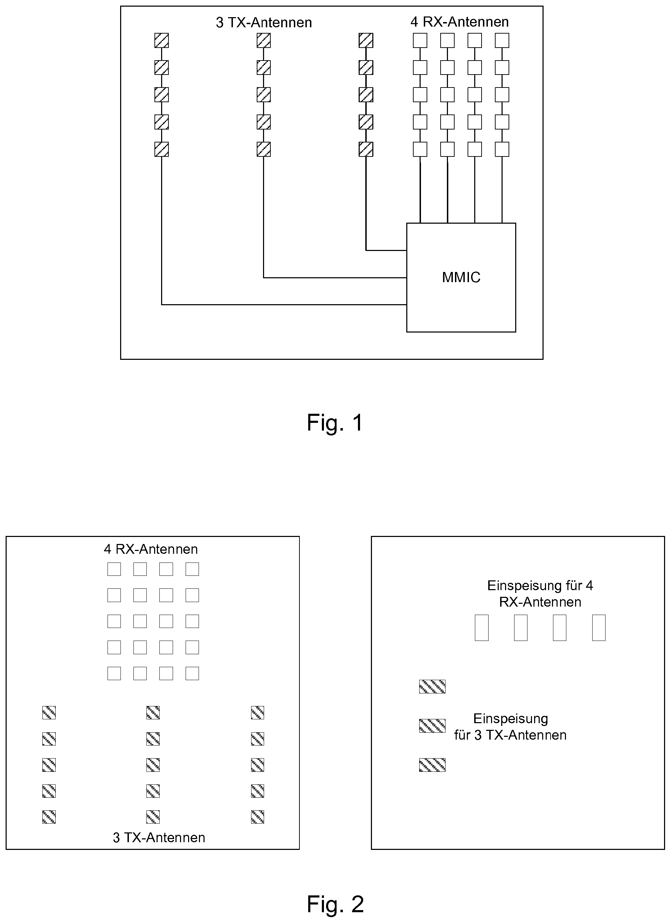

Heute werden Antennen für Radarsysteme zur Umfelderfassung meist als planare Antennen auf einer Hochfrequenzplatine realisiert. In Figur 1 ist eine Hochfrequenz-platine mit einem Hochfrequenzbauteil, einem sogenannten MMIC (Monolithic Microwave Integrated Circuit) und mit 3 Sendeantennen (TX) sowie 4 Empfangsantennen (RX) gezeigt, wobei die Antennen jeweils aus mehreren Einzelstrahlern zusammengesetzt sind. Die Antennen sind als planare Patchantennen realisiert.

Die Antennen und ihre Zuleitungen vom Hochfrequenzchip benötigen auf der Oberlage der Hochfrequenzplatine ein spezielles Substrat mit für Hochfrequenz geeigneten Materialdaten (z.B. definierte Dicke, definierte Dielektrizitätskonstante, sehr geringer Verlustwinkel). Insbesondere die Materialkosten dieses speziellen Substrats und seine Prozessierung (auch wegen der erforderlichen hohen Strukturgenauigkeiten) führen auf um Faktoren erhöhte Kosten gegenüber einer reinen Niederfrequenzplatine gleicher Größe und gleicher Lagenanzahl. Neben den Kosten sind aber auch die Signalverluste in den Antennen und ihren Zuleitungen nachteilig. Für eine Sende- und eine Empfangsantenne inkl. Zuleitungen liegt man zusammen typischerweise bei Leistungsverlusten von etwa 6dB. Eine derartig reduzierte Sensorempfindlichkeit resultiert in einer um 30% reduzierten maximalen Sensorreichweite.

Aufgrund der genannten Nachteile von platinenbasierten Antennen werden nun verstärkt sogenannte Wellenleiterantennen betrachtet. Hier werden Antennen und ihre Zuleitungen mit Hilfe von Hohlleitern realisiert, welche im einfachsten Fall rechteckförmige Hohlräume mit metallischen bzw. metallisierten Wänden darstellen. Eine solche Antenne kann als quaderförmiges Kunststoffteil ausgeführt sein und ist beispielsweise in Figur 2 gezeigt. Wie in Figur 2 gezeigt wird, gibt es auf der Oberseite Öffnungen zur Abstrahlung, auf der Unterseite Öffnungen zur Einspeisung und innerhalb Hohlraumstrukturen, wobei alle Oberflächen (außen und innen) metallisiert sind. Eine solche Antenne ist typischerweise aus mehreren Lagen zusammengesetzt, was beispielsweise auch ein Kreuzen von Hochfrequenzverbindungen zulässt. Da die Anordnung der Einzelantennen nun unabhängig vom Chip ist, kann man, wie im Figur 2 dargestellt ist, die 3 Sendeantennen z.B. unterhalb der 4 Empfangsantennen anordnen (bei der platinenbasierten Antenne nach Figur 1 sind sie nebeneinander angeordnet). Da der Chip nun nicht mehr auf der Antennenebene liegt, kann man kleinere Sensoren realisieren.

Als Herstellungsmethode für Kunststoffantennen kommt neben Spritzguss mittlerweile auch der 3D-Druck in Frage. Aus metallisiertem Kunststoff hergestellte Wellenleiterantennen haben gegenüber einer vollmetallischen Realisierung deutliche Kostenvorteile. Herausforderungen bei kunststoffbasierten Wellenleiterantennen sind dahingehend die nötige Genauigkeit der Strukturen und die passgenaue Verbindung der mehreren Kunststofflagen - neue Herstellungsverfahren machen dies mittlerweile aber möglich.

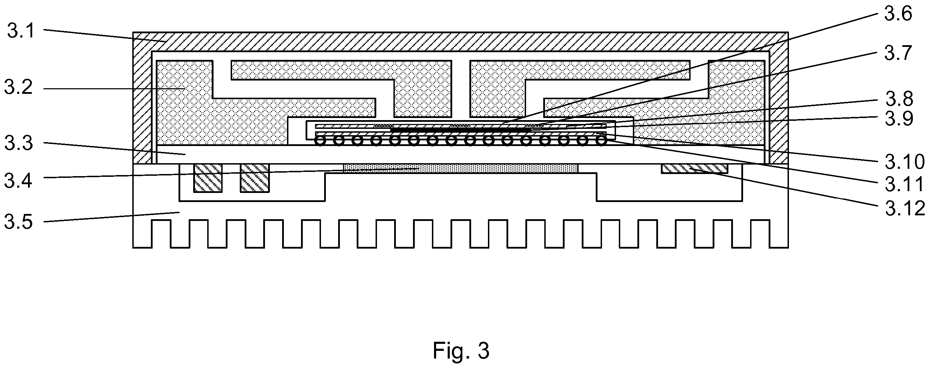

Aber auch bei der Verwendung von Kunststoffantennen hat man heute noch Hochfrequenzsignale auf der Platine, insbesondere vom Chipausgang bis zu einer in die Hohlleiterantenne abstrahlenden Struktur. Aufgrund dessen hat man auch hier eine vergleichsweise teure Platine. Aus diesem Grunde gibt es Bestrebungen direkt von der Oberseite des Hochfrequenzchips in die Hohleiterantenne abzustrahlen, dies ist in Figur 3 dargestellt. Dieser Ansatz hat allerdings einige Nachteile:
- toleranzkritisch ist der Übergang vom Chip 3.6 in die Wellenleiterantenne 3.2. Die Toleranzkette ist lang, wobei beispielsweise folgendes eingeht: Lötung vom Chip, Dicke vom Chip, Toleranzen der Antenne;
- direkter Kontakt der Antenne zum Chip (sowohl bei Produktion als auch über die Lebenszeit), wodurch der Chip geschädigt werden kann;
- Chip 3.6 benötigt neben dem Siliziumkern 3.9 nicht nur unten einen sogenannten Redistributionlayer 3.10, sondern auch oben einen weiteren Redistributionlayer 3.8 für die Abstrahlelemente 3.7;
- Entwärmung vom Chip ist ungünstig, da Kunststoffantenne 3.2 und vorderes Kunststoffgehäuse 3.1 thermisch isolieren, so dass Wärme vom Chip fast ausschließlich nur über die Platine 3.3 abgeführt werden kann. Die thermische Ankopplung des Chips an die metallische Sensorrückseite 3.5 über die Wärmeleitpaste 3.4 ist also nicht direkt, sondern nur durch die Platine hindurch möglich.

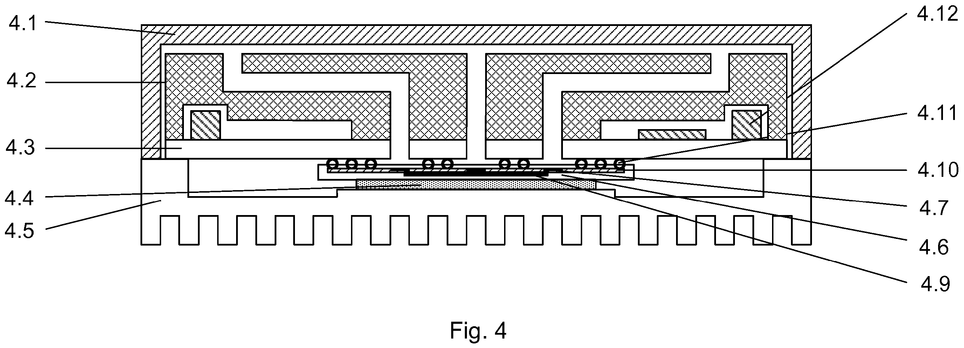

Zur Umgehung dieser Nachteile wird deshalb vorliegend unter anderem der Aufbau nach Figur 4 vorgeschlagen. Abstrahlende Elemente 4.7 sind auf der Unterseite des Chips 4.6 angeordnet, wobei sich der Chip 4.6 auf der zur Kunststoffantenne 4.2 gegenüberliegenden Seite der Platine 4.3 befindet. Vom Chip 4.6 wird die Kunststoffantenne 4.2 durch die Platine 4.3 gespeist, welche an diesen Stellen für die Radarwellen durchlässig ist; es werden also Hochfrequenz-Übergange vom Chip 4.6 in die Kunststoffantenne 4.2 durch die Platine 4.3 hindurch realisiert.

Wie im Figur 4 dargestellt, kann die Durchlässigkeit der Platine 4.3 einfach durch ein Loch in der Platine 4.3 realisiert werden, wobei die Seitenwände der Platine 4.3 an dieser Stelle dann metallisiert werden, so dass jeweils eine Art Wellenleiter realisiert wird.

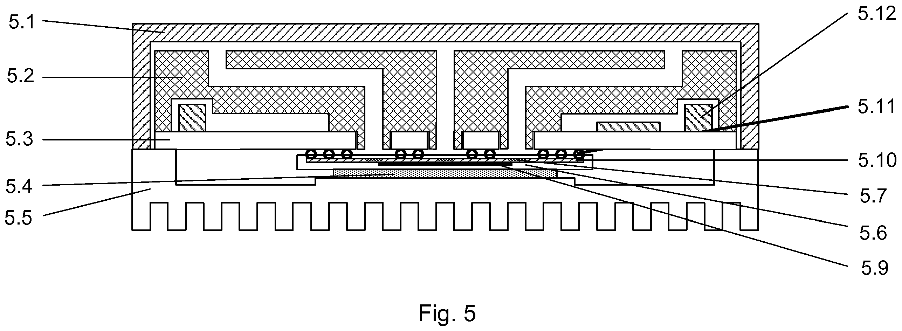

Alternativ, wie beispielsweise in Figur 5 gezeigt ist, kann man die Übergänge auch so realisieren, dass es Durchbrüche in der Platine 5.3 gibt und in diesen Durchbrüchen bzw. durch diese Durchbrüche Wellenleiterfortsätze von der Kunststoffantenne 5.2 ragen. Ein anderer Ansatz für durchlässige Übergänge in der Platine besteht darin, dort die Metallisierungen auf bzw. zwischen den Trägermaterialschichten der Platine wegzulassen und diese Bereiche mit Durchkontaktierungen zu umranden.

Um zu verhindern, dass an den Übergängen Strahlung in den Zwischenraum von Hochfrequenzbauteil und Platine entweicht, was einerseits zu Verlust an Leistung und andererseits zu Verkopplung zwischen den Übergängen führen würde, können um die Übergänge herum und damit zwischen den Übergängen Lotperlen (Balls) platziert werden. Dies ist beispielsweise in Figur 4 dargestellt, wo ein als sogenanntes Ball-Grid-Array ausgeführter Chip 4.6 mit Balls 4.11 gezeigt ist. Bei geeigneter Auslegung und Anordnung dieser Lotperlen 4.11 können sie eine Bandsperre für die verwendete Hochfrequenz darstellen und somit als EBG-Struktur (Electromagnetic Band-Gap) wirken.

Ein weiterer Vorteil der Anordnung nach Figur 4 besteht darin, dass sie eine gute thermische Kontaktierung des Chips 4.6, der eine hohe Stromaufnahme und damit Eigenerwärmung hat, erlaubt. Dazu wird der Chip 4.6 - wie dargestellt - über Wärmeleitpaste 4.4 an die sensorrückseitige Abdeckung 4.5, welche aus Aluminium bestehen kann und Kühlrippen besitzt, angekoppelt.

Wie in Figur 4 zudem dargestellt, können auf der der Kunststoffantenne 4.2 zugewandten Seite der Platine 4.3 Bauteile 4.12 bestückt werden, welche durch Kavitäten in der Kunststoffantenne 4.2 abgedeckt sind. Da die Oberfläche der Kunststoffantenne 4.2 ohnehin metallisiert ist, lässt sich so ohne Zusatzkosten eine elektrische Schirmung von Bauteilen realisieren.

Abschließend sei noch folgendes bemerkt:
Bei einem Radarsystem wird sowohl gesendet, als auch empfangen. Vereinfachend wird in der obigen Beschreibung häufig nicht beides explizit ausgeführt bzw. unterschieden. Z.B. wird bei der Antenne oder den Elementen auf dem Chip von "(Ab)strahlen" gesprochen - bei Empfangsantennen bedeutet das natürlich "Empfangen"; und wenn beim Wellenleiter auf der Rückseite der Antenne von "Einspeisen" gesprochen wird, dann bedeutet das bei Empfangsantennen ein "Auskoppeln".

## Patentansprüche

1. Radarsystem zur Umfelderfassung eines Kraftfahrzeugs aufweisend
- eine Antenne auf Kunststoffbasis, wobei die Kunststoffantenne (4.2, 5.2) eine oder mehrere Einzelantennen zum Senden und/oder Empfangen von Radarsignalen aufweist, und
- eine Platine (4.3, 5.3) aufweisend mindestens einen Hochfrequenzchip (4.6, 5.6) mit mindestens einem Element (4.7, 5.7) zum direkten Abstrahlen bzw. Empfangen, wobei
- die Kunststoffantenne (4.2, 5.2) auf der zu dem wenigstens einen Hochfrequenzchip (4.6, 5.6) gegenüberliegenden Seite der Platine (4.3, 5.3) angeordnet ist,
- das mindestens eine abstrahlende bzw. empfangende Element (4.7, 5.7) so ausgebildet ist, dass es in Richtung Platine (4.3, 5.3) abstrahlt bzw. aus Richtung Platine (4.3, 5.3) empfängt,
- die Platine (4.3, 5.3) im Bereich des mindestens einen abstrahlenden bzw. empfangenden Elements (4.7, 5.7) für Radarwellen durchlässig ist, und
- sich an der mindestens einen durchlässigen Stelle der Platine (4.3, 5.3) eine Ein- bzw. Auskoppelstelle auf der Kunststoffantenne (4.2, 5.2) befindet.

2. Radarsystem nach Anspruch 1, **dadurch gekennzeichnet, dass** die mindestens eine für Radarwellen durchlässige Stellen durch ein Loch in der Platine (4.3, 5.3) mit metallisierten Seitenwänden ausgebildet ist.

3. Radarsystem nach Anspruch 1, **dadurch gekennzeichnet, dass** die mindestens eine für Radarwellen durchlässige Stelle in der Platine (4.3, 5.3) dadurch realisiert ist, dass die Platine (4.3, 5.3) einen Durchbruch aufweist, in dem bzw. durch den ein Wellenleiterfortsatz von der Kunststoffantenne (4.2, 5.2) ragt.

4. Radarsystem nach Anspruch 1, **dadurch gekennzeichnet, dass** die mindestens eine für Radarwellen durchlässige Stelle in der Platine (4.3, 5.3) dadurch realisiert ist, dass sich dort auf und/oder zwischen Trägermaterialschichten der Platine (4.3, 5.3) keine Metallisierung befindet und die Stelle mit Durchkontaktierungen umrandet ist.

5. Radarsystem nach einem der vorangehenden Ansprüche, **dadurch gekennzeichnet, dass** auf einer Unterseite des mindestens einen Hochfrequenzchips (4.6, 5.6) Lotperlen (4.11, 5.11) um das mindestens eine abstrahlende bzw. empfangende Element (4.7, 5.7) so angeordnet sind, dass ein seitliches Entweichen der Strahlung in einem Zwischenraum von Hochfrequenzchip (4.6, 5.6) und Platine (4.3, 5.3) reduziert bzw. verhindert wird, insbesondere um eine Verkopplung zwischen mehreren Übergängen zu vermeiden.

6. Radarsystem nach einem der vorangehenden Ansprüche, **gekennzeichnet durch** eine thermisch gut leitende Komponente, insbesondere einen metallischen Deckel (4.5, 5.5), wobei die Komponente auf derselben Seite der Platine (4.3, 5.3) wie der mindestens eine Hochfrequenzchip (4.6, 5.6) angeordnet ist, und bevorzugt ein thermischer Kontakt, insbesondere durch Wärmeleitpaste (4.4, 5.4), zwischen Hochfrequenzchip (4.6, 5.6) und der Komponente hergestellt ist.

7. Radarsystem nach einem der vorangehenden Ansprüche, **dadurch gekennzeichnet, dass** auf der der Kunststoffantenne (4.2, 5.2) zugewandten Seite der Platine (4.3, 5.3) mindestens ein Bauteil (4.1, 5.1) angeordnet ist, wobei das Bauteil (4.1, 5.1) durch eine Kavität in der Kunststoffantenne (4.2, 5.2), die bevorzugt metallisiert ist, abgedeckt ist.

## Claims

1. Radar system for detecting the environment of a motor vehicle, comprising
- a plastic-based antenna, wherein the plastic antenna (4.2, 5.2) has one or more individual antennas for transmitting and/or receiving radar signals, and
- a circuit board (4.3, 5.3) comprising at least one high-frequency chip (4.6, 5.6) having at least one element (4.7, 5.7) for direct emission or reception, wherein
- the plastic antenna (4.2, 5.2) is arranged on the side of the circuit board (4.3, 5.3) opposite the at least one high-frequency chip (4.6, 5.6),
- the at least one emitting or receiving element (4.7, 5.7) is designed such that it emits in the direction of the circuit board (4.3, 5.3) or receives from the direction of the circuit board (4.3, 5.3),
- the circuit board (4.3, 5.3) is permeable to radar waves in the region of the at least one emitting or receiving element (4.7, 5.7), and
- a coupling or decoupling point on the plastic antenna (4.2, 5.2) is located at the at least one permeable point of the circuit board (4.3, 5.3).

2. Radar system according to Claim 1, **characterized in that** the at least one point that is permeable to radar waves is formed by a hole in the circuit board (4.3, 5.3) with metallized side walls.

3. Radar system according to Claim 1, **characterized in that** the at least one point in the circuit board (4.3, 5.3) that is permeable to radar waves is realized **in that** the circuit board (4.3, 5.3) has an aperture in which or through which a waveguide extension projects from the plastic antenna (4.2, 5.2).

4. Radar system according to Claim 1, **characterized in that** the at least one point in the circuit board (4.3, 5.3) that is permeable to radar waves is realized **in that** there is no metallization there on and/or between carrier material layers of the circuit board (4.3, 5.3) and the point is surrounded by vias.

5. Radar system according to any of the preceding claims, **characterized in that** solder beads (4.11, 5.11) are arranged on a bottom side of the at least one high-frequency chip (4.6, 5.6) around the at least one emitting or receiving element (4.7, 5.7) such that lateral leaking of the radiation in an intermediate space between the high-frequency chip (4.6, 5.6) and the circuit board (4.3, 5.3) is reduced or prevented, in particular in order to prevent coupling between several transitions.

6. Radar system according to any of the preceding claims, **characterized by** a thermally highly conductive component, in particular a metallic cover (4.5, 5.5), wherein the component is arranged on the same side of the circuit board (4.3, 5.3) as the at least one high-frequency chip (4.6, 5.6), and preferably thermal contact, in particular by thermally conductive paste (4.4, 5.4), is established between the high-frequency chip (4.6, 5.6) and the component.

7. Radar system according to any of the preceding claims, **characterized in that** at least one part (4.1, 5.1) is arranged on the side of the circuit board (4.3, 5.3) facing the plastic antenna (4.2, 5.2), wherein the part (4.1, 5.1) is covered by a cavity in the plastic antenna (4.2, 5.2), which is preferably metallized.

## Revendications

1. Système radar pour la détection de l'environnement d'un véhicule automobile, possédant
- une antenne à base de plastique, l'antenne en plastique (4.2, 5.2) possédant une ou plusieurs antennes individuelles destinées à l'émission et/ou à la réception de signaux radar, et
- une platine (4.3, 5.3) possédant au moins une puce à haute fréquence (4.6, 5.6) comprenant au moins un élément (4.7, 5.7) destiné à l'émission ou à la réception directe,
- l'antenne en plastique (4.2, 5.2) étant disposée sur le côté de la platine (4.3, 5.3) opposé à l'au moins une puce à haute fréquence (4.6, 5.6),
- l'au moins un élément émetteur ou récepteur (4.7, 5.7) étant conçu de telle sorte qu'il émette en direction de la platine (4.3, 5.3) ou reçoive en provenance de la platine (4.3, 5.3),
- la platine (4.3, 5.3) étant perméable aux ondes radar dans la zone de l'au moins un élément émetteur ou récepteur (4.7, 5.7), et
- un point d'injection ou de découplage se trouvant sur l'antenne en plastique (4.2, 5.2) au niveau de l'au moins un emplacement perméable de la platine (4.3, 5.3).

2. Système radar selon la revendication 1, **caractérisé en ce que** l'au moins un emplacement perméable aux ondes radar est formé par un trou dans la platine (4.3, 5.3) avec des parois latérales métallisées.

3. Système radar selon la revendication 1, **caractérisé en ce que** l'au moins un emplacement perméable aux ondes radar est réalisé dans la platine (4.3, 5.3) par le fait que la platine (4.3, 5.3) présente une ouverture traversante dans laquelle ou à travers laquelle fait saillie un prolongement de guide d'ondes de l'antenne en plastique (4.2, 5.2).

4. Système radar selon la revendication 1, **caractérisé en ce que** l'au moins un emplacement perméable aux ondes radar est réalisé dans la platine (4.3, 5.3) par le fait qu'aucune métallisation ne s'y trouve sur et/ou entre des couches de matériau porteur de la platine (4.3, 5.3) et que l'emplacement est entouré de contacts traversants.

5. Système radar selon l'une des revendications précédentes, **caractérisé en ce que** des perles de soudure (4.11, 5.11) sont disposées sur un côté inférieur de l'au moins une puce à haute fréquence (4.6, 5.6) autour de l'au moins un élément émetteur ou récepteur (4.7, 5.7), de telle sorte qu'une fuite latérale du rayonnement dans un espace intermédiaire entre la puce à haute fréquence (4.6, 5.6) et la platine (4.3, 5.3) est réduite ou empêchée, notamment pour éviter un couplage entre plusieurs transitions.

6. Système radar selon l'une des revendications précédentes, **caractérisé par** un composant bon conducteur thermique, notamment un couvercle métallique (4.5, 5.5), le composant étant disposé sur le même côté de la platine (4.3, 5.3) que l'au moins une puce à haute fréquence (4.6, 5.6), et un contact thermique étant de préférence établi, notamment par une pâte de conduction thermique (4.4, 5.4), entre la puce à haute fréquence (4.6, 5.6) et le composant.

7. Système radar selon l'une des revendications précédentes, **caractérisé en ce qu'**au moins un composant (4.1, 5.1) est disposé sur le côté de la platine (4.3, 5.3) qui fait face à l'antenne en plastique (4.2, 5.2), le composant (4.1, 5.1) étant recouvert par une cavité dans l'antenne en plastique (4.2, 5.2), laquelle est de préférence métallisée.
